# EUROPEAN PATENT APPLICATION

(11) **EP 2 037 680 A2**
(43) Date of publication of application: **18.03.2009**
(21) Application number: 08012369.8
(22) Date of filing: 09.07.2008
(51) Int. Cl.: H04N 7/14

(54) **Video communication apparatus and method of using the same**

(30) Priority: 14.09.2007 KR 20070093477
(71) Applicant: Digital Multimedia Technology Co., Ltd., Seoul, 135-900 (KR)
(72) Inventor: Lee, Hee Kee, Seoul 137-040 (KR)
(74) Representative: Baumann, Jörg

(57) **Abstract**

Disclosed herein is a video communication apparatus. A LAN connection unit connected to a LAN provides access to the Internet. A modem provides access to a PSTN. A DSP processes digital signals received from the LAN connection unit and the modem, and converts internal signals into digital signals. A CPU receives standard signals, and converts them into signals suitable for a TV, or directly/indirectly receives signals through a terrestrial wave/cable broadcast signal reception unit or camera signals and transmits them to the DSP. A memory unit records programs and protocols. A PIP processing unit directly/indirectly receives signals from the CPU or the terrestrial wave/cable broadcast signals, receives adjustment commands for image compilation, and transmits compiled signals so as to arrange images, to be displayed, in a predetermined manner. A TV receives and displays the compiled signals from the PIP processing unit. A user interface inputs commands for the CPU and inputs additional signals for the CPU.

## Description

The present invention relates generally to a video communication apparatus and a method of using the same, and, more particularly, to an apparatus using a television (hereinafter abbreviated as "TV") as a video display device, which enables a user to perform video communication while watching a TV screen, and a method of using the same.

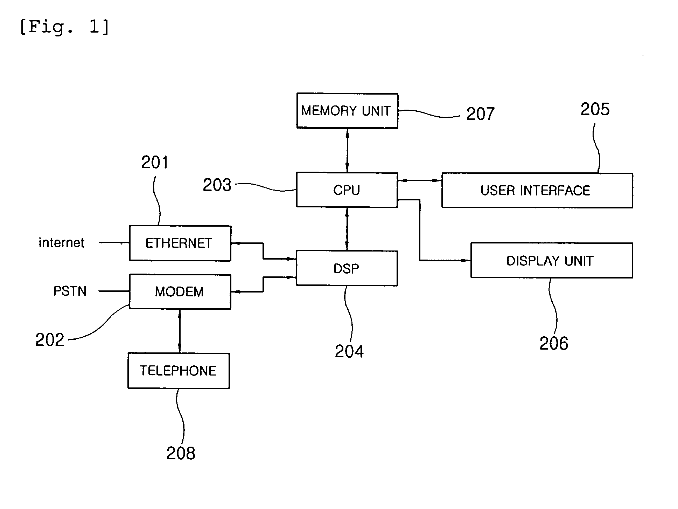

As shown in FIG. 1, a Multimedia Over Internet Protocol (MOIP) phone includes an Ethernet unit 201 used to perform video communication using the Internet, a modem 202 configured to use a general Public Switched Telephone Network (PSTN), a Digital Signature Processor (DSP) 204 configured to decode H.263 and H.264 video signals and G.729 and G.711 audio signals input via the Internet, and to process voice signals, Dual Tone Multi Frequency (DTMF) signals, and ringback tones input via the PSTN, a Central Processing Unit (CPU) 203 configured to collect raw data, in which the H.263 and H.264 video signals and the G.729 and G.711 audio signals are decoded, voice signals, ringback tones, and various types of control data, and to convert them to be displayed on a display unit 206, a memory unit 207 configured to store executable programs for converting the signals, and font data, and controlled by the CPU, and a user interface 205 configured to transmit user input to the CPU 203.

When an Internet Protocol (IP) video call is made using MOIP, the MOIP phone can perform authentication and charging via the Internet using a Wide Area Network (WAN) protocol, such as Point to Point Protocol over Ethernet (PPPoE), Dynamic Host Configuration Protocol (DHCP) Static IP, and a server protocol, such as a Session Initiation Protocol (SIP) and an H.323 protocol. After receiving authentication from a server, the MOIP phone performs processing regarding the physical portion of the Internet, a Transmission Control Protocol (TCP), and a User Datagram Protocol (UDP) through the Ethernet unit 201, so that a video call can be made from a MOIP board to another MOIP board via H.263 and H.264 video signals and G.729 and G.711 audio signals in a Peer to Peer (P2P) manner. Therefore, H.263 and H.264 video signals, G.729 and G.711 audio signals, various types of control signals, and information data can enter and exit the MOIP board. Thereafter, the DSP 204 converts the data, which entered the MOIP board, from the compressed type H.263 and H.264 video signals and G.729 and G.711 audio signals to raw type data.

Images are displayed on the display unit 206 in the form of digital RGB (Red, Green, and Blue), Low Voltage Differential Signals (LVDS), or Digital Visual Interface (DVI) using the video data of the decompressed raw data. The compressed G.729 and G.711 audio signals are decompressed in the form of Pulse Code Modulation (PCM) data. Thereafter, the PCM data passes through a Digital-to-Analog Converter (DAC) for converting digital signals into analog signals that a person can hear, and is then output through a speaker or a telephone receiver.

Further, the MOIP phone compresses and converts raw data, which entered through the user interface 205, into H.263 and H.264 video signals and G.729 and G.711 audio signals, and sends the resulting data to another MOIP phone through the Ethernet unit 201. Signals entering the modem 202 from the PSTN are converted into PCM data through the modem 202, and various types of control signals and information signals, such as Dual Tone Multi Frequency (DTMF) signals, ringback tones, and Caller IDentification (CID), are detected therefrom. The detected various types of control signals and information signals are displayed and enable information about a counter party to be identified. The PCM data, obtained through the conversion of the modem, passes through the DAC for converting digital signals (PCM data) into analog signals that a person can hear, and is then output through a speaker or a telephone receiver.

Here, a user can set a telephone directory and a call log IP through the user interface 205, and can view input data on the display unit 206.

The prior art MOIP phone may use a separate MOIP-dedicated display unit as the display unit 206, or use a TV, which is one of typical display units, to display communication images. However, in the case in which a TV is used, communication images may collide with external images input through terrestrial waves or the cable of a cable TV, so that a method of cutting off external images and sound signals input through terrestrial waves or a cable TV and displaying the images of a counter party had been used in the prior art. However, this method has a problem in that the method is performed irrespective of the intention of a user, and the user may be hindered in watching important TV programs.

Meanwhile, when a call is received, information providing notification of the arrival of a phone call is displayed on a TV, so that a user can selectively answer the phone call or continue to watch TV. However, even in this case, the user should select either to answer the phone call or to continue to watch TV, so that the user cannot watch TV while answering the phone call.

It is the technical problem underlying the invention to provide for a video communication apparatus and a method of using the video communication apparatus capable of avoiding collisions between a phone call and image signals or voice signals, that is, external signals, and displaying all of them, thus making it possible to watch TV while answering the phone call, and/or capable of freely changing the weight of display of a TV broadcast and a video communication image based on the degree of importance thereof.

The invention solves this problem by providing a video communication apparatus having the features of claim 1 and a method of using the video communication apparatus having the features of claim 2, 3, 5, 6, 7 or 8.

Advantageous embodiments of the invention are mentioned in the subclaims, the wording of which is incorporated herewith into the description by reference to avoid unnecessary text repetition.

In order to accomplish the above objects, the present invention provides a video communication apparatus, including a Local Area Network (LAN) connection unit connected to a LAN so as to connect to the Internet; a modem configured to provide access to a Public Switched Telephone Network (PSTN); a Digital Signature Processor (DSP) configured to process digital signals received from the LAN connection unit and the modem, and to convert internal signals into digital signals to be transmitted through the modem or the LAN connection unit; a Central Processing Unit (CPU) configured to receive raw data, processed and obtained by the DSP, and to convert them into signals suitable for a TV, or configured to directly/indirectly receive signals through a terrestrial wave/cable broadcast signal reception unit or camera signals and to transmit them to the DSP; a memory unit connected to the CPU and configured to record programs and protocols, which are signal processing references of the CPU; a Picture In Picture (PIP) processing unit configured to directly/indirectly receive signals from the CPU or the terrestrial wave/cable broadcast signals, to receive adjustment commands for image compilation, and to transmit compiled signals so as to arrange images, to be displayed, in a predetermined manner; a TV configured to receive and display the compiled signals from the PIP processing unit; and a user interface configured to input commands for the CPU and to input additional signals for the CPU.

Further, the video communication apparatus according to the present invention can record image signals transmitted from another video communication apparatus in the memory unit or a recording unit connected to the user interface.

In order to accomplish the above-described objects, the present invention provides a method of using the video communication apparatus according to the present invention including: an external image processing step of receiving external image signals through the terrestrial wave/cable broadcast, and maintaining them or converting them into a form suitable for a TV; a counter party image processing step of receiving image signals from a counter party for communication through the Internet or the PSTN, and converting them into signals in a form suitable for the TV; a user image processing step of maintaining or converting the user side images, input through the user interface, into signals in a form suitable for the TV; and a step of displaying signals, resulting from the external image processing step, the counter party image processing step, and the user image processing step on a screen of the TV, in a state of being received and compiled by the PIP processing unit, in a PIP manner.

In order to accomplish the above-described objects, the present invention provides a method of using the video communication apparatus according to the present invention including a step of checking a call request of a general telephone or a mobile phone through the PSTN; a step of checking a predetermined signal set value included in the call request; and a step of, when the predetermined signal set value is checked, requesting a call from another video communication apparatus over the Internet.

In order to accomplish the above-described objects, the present invention provides the method further including a step of the another video communication apparatus checking signals included in a call request of the video communication apparatus; a step of checking a predetermined signal set value included in the call request; and a step of, when the predetermined signal set value is checked, calling a general telephone or a mobile phone through the accessed PSTN.

In order to accomplish the above-described objects, the present invention provides a method of using the video communication apparatus according to the present invention in a PIP technique, including a step of checking a call request of an another video communication apparatus through the Internet; a step of checking a predetermined signal set value included in the call request; and a step of, when the predetermined signal set value is checked, calling a general telephone or a mobile phone through the accessed PSTN.

In order to accomplish the above-described objects, a method of using the video communication apparatus according to the present invention in a PIP technique, the user interface including a sensor for sensing an intruder in a target space, and the method including a step of sensing the intruder and providing a notification thereof to the CPU using the sensor; and a step of the CPU transmitting images of a camera or call signals to at least one of another video communication apparatus, a mobile phone, and a general phone through the DSP.

In order to accomplish the above-described objects, the present invention provides a method of using the video communication apparatus according to the present invention in a PIP technique, including a step of setting a transmission mode for transmitting external images of terrestrial wave/cable broadcast for another video communication apparatus through the user interface; a step of calling and accessing the another video communication apparatus over the Internet; and a step of converting the external images into signals in a form suitable for the Internet and transmitting the resulting signals to the another video communication apparatus.

In order to accomplish the above-described objects, the present invention provides a method of using the video communication apparatus according to the present invention in a PIP technique, including a step of checking a call signal from another video communication apparatus and obtaining access thereto; and a step of maintaining or converting signals transmitted from the another video communication apparatus into signals suitable for a TV, and displaying them on a screen of the TV.

The above and other objects, features and other advantages of the present invention will be more clearly understood from the following detailed description taken in conjunction with the accompanying drawings, in which:
FIG. 1 is a block diagram showing the configuration of a general MOIP phone according to the prior art;
FIG. 2 is a block diagram showing the configuration of a video communication apparatus using Picture In Picture (PIP) according to an embodiment of the present invention; and
FIG. 3 is a block diagram schematically showing the configuration of a video communication system so as to describe a method of using the video communication apparatus according to the present invention and another video communication apparatus using a network connected thereto.
FIG. 4 is showing the configuration of a video communication apparatus using Picture In Picture (PIP) according to another embodiment of the present invention.

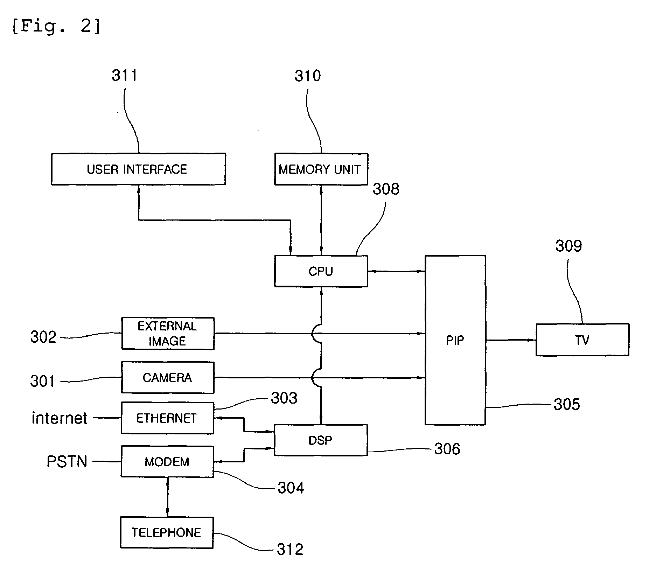

FIG. 2 is a block diagram schematically showing the configuration of a video communication apparatus according to an embodiment of the present invention.

Referring to FIG. 2, the video communication apparatus according to the present embodiment, includes an Ethernet unit 303 connected the Internet, a modem 304 configured to provide access to a PSTN, a DSP 306 configured to process digital signals received from the Ethernet unit 303 and the modem 304, and to convert internal signals into digital signals to be transmitted through the modem 304 or a Local Area Network (LAN) connection unit, a CPU 308 configured to receive raw signals(raw data) processed and obtained by the DSP 306 and to convert them into image/voice signals, suitable for a TV, or configured to directly/indirectly receive external images 302 obtained from a terrestrial wave/cable signal reception unit and images received from a camera 301 and to transmit them to the DSP 306, a memory unit 310 connected to the CPU 308 and configured to record programs and protocols, which are the signal processing reference of the CPU 308, a Picture In Picture (PIP) processing unit 305 configured to directly/indirectly receive the image/voice signals of the CPU 308, terrestrial wave/cable signals, and adjustment commands for image compilation, and to transmit compiled signals so as to arrange images to be displayed in a predetermined manner, a TV 309 configured to receive and display the compiled signals from the PIP processing unit 305, and a user interface 311, configured to input commands for the CPU 308 and to input additional signals for the CPU 308. The modem 304 is connected to a telephone 312.

Here, in the configuration of embodiment shown in FIG. 2, although the camera 301 is connected to the PIP processing unit 305 and the telephone 312 is connected to the modem 304, the camera 301 may be directly connected to the CPU 308 in such a way that the camera 301 forms part of the user interface 311. That is, the camera may be alternatively switched to the user interface 311.

Further, in the present embodiment, image signals, input via the Internet or PSTN, are input to the PIP processing unit 305 after being processed by the CPU 308 through the DSP 306, and external images and camera images are directly input to the PIP processing unit 305. However, the external images and camera images may be input to the CPU 308 first, and then collectively input to the PIP processing unit 305 from the CPU 308.

This example may be appropriate for the case in which a set-top box is necessary to acquire external image signals suitable for a TV. For example, if the TV 309 is a digital TV and original signals for external images include analog signals or other types of digital signals, that is, compressed and modulated digital signals, the external images must be processed to have a form suitable for the digital TV through a signal processor, such as a set-top box. A general set-top box includes a tuner for receiving broadcast signals, a demodulator for converting Intermediate Frequency (IF) signals, acquired through filtering performed by the tuner, into digital baseband signals, and then converting them into Moving Picture Experts Group-Transport Stream (MPEG-TS) data, an MPEG decoder for decoding the MPEG-TS data of the demodulator into video signals and audio signals, and a CPU for transmitting the signals of the MPEG decoder to the TV.

Therefore, if image/voice processing units, such as a tuner, a demodulator, and a decoder, are included in a set-top box and the set-top box is directly connected to the CPU of the video communication apparatus according to the present invention, the CPU performs desired processing and transmits the results thereof to the PIP processing unit. In this case, the CPU directly receives external image signals and camera image signals, and the PIP processing unit indirectly receives the external image signals and the camera image signals through the CPU. In both cases, the PIP processing unit can be adjusted by the CPU so as to determine the screen of a path to be processed as a large screen, the screen of a path to be processed as a PIP screen, the size and position of the PIP screen, and whether to switch a background screen to the PIP screen. Further, the CPU can be adjusted through the user interface, so that the PIP processing unit can be adjusted by the user interface.

When the construction is viewed from simplification and unification, even though the CPU 308, the PIP processing unit 305, the memory 310, and the DSP 306 are formed to be separated from each other in the present embodiment, they may be considered to be part forming a single microcomputer. Further, all of those elements may be formed as a single chip (one chip), or two or more elements can be combined with each other so as to form the appropriate number of chips.

Meanwhile, in the present embodiment, the Ethernet unit is used to connect the video communication apparatus and the Internet, that is, it can be seen that the Ethernet unit is used as a kind of means for performing authentication or charging. Therefore, the Ethernet unit is used as a typical general-type LAN, and may be substituted for another type of internet connection means.

Meanwhile, if a memory unit and/or other storage units to be connected to the user interface are used in the present invention, external images, the images of a counter party, and the images of a user may all be stored. Such images may be used as evidence means for checking the verbal acceptance or approval of a counter party in business.

In an example in which video communication using such embodiments is realized, external images are normally input to a TV through the PIP processing unit. These external images form the background screen or main screen of the TV. When a call signal (request for a call) arrives from a counter party via the PSTN or Ethernet, an indication, such as a CID, may be displayed on the TV screen using the PIP or On-Screen Display (OSD) through the video communication apparatus. Therefore, a user can perceive the arrival of the phone call and the user of the video communication apparatus can select to receive the call while watching TV.

When access to the video communication apparatus of a counter party is realized, image signals and voice signals transmitted from the counter party are input to the video communication apparatus of the user. The signals, received through the Internet or PSTN, are data signals and analog signals, compressed for transmission, and are directly transmitted to the DSP, and become raw data for displaying the image and voice.

The raw data is transmitted to the CPU, and the CPU converts the raw data into image signals and voice signals, which can be easily realized in the TV, based on a predetermined program. The converted image signals and voice signals are displayed on the TV in a PIP manner through the PIP processing unit. At the same time, the image of the user, obtained by driving a camera, forms one of the PIP screens of the TV through the PIP processing unit.

A background screen and a PIP type screen are displayed on a TV screen according to a predetermined order based on paths to which image signals are input. If the CPU provides a conversion signal to the PIP processing unit through the user interface, the background screen and the PIP screen can be switched. Here, voice signals can be output through a receiver coupled to the user interface, a telephone receiver connected to the modem, and a TV speaker, and voices made by voice signals, input through two or more paths, can be heard together from a single speaker. The paths of voices can be switched depending on the operation of the user.

Meanwhile, image signals and voice signals which flow from external terrestrial waves and cable broadcast, and signals, generated in a camera and a microphone, which are formed on a user side, are first input to the PIP processing unit, and are then transmitted to the TV. In addition, they may be sequentially converted into raw type data and compressed type signals by the CPU and the DSP, and then transmitted to the counter party of communication over the Internet or PSTN.

Since the concept and protocol of the conversion (including compression and decompression) of data and signals between networks and respective elements related to the video communication apparatus according to the present invention are well known as described in the prior art as an example, a detailed description thereof will be omitted.

In the present invention, a TV is not limited to a TV set that is commercially sold, and includes a general display unit, such as a computer monitor, which can function as a TV set. However, a dedicated display unit for a video communication apparatus is not included in the definition of a TV.

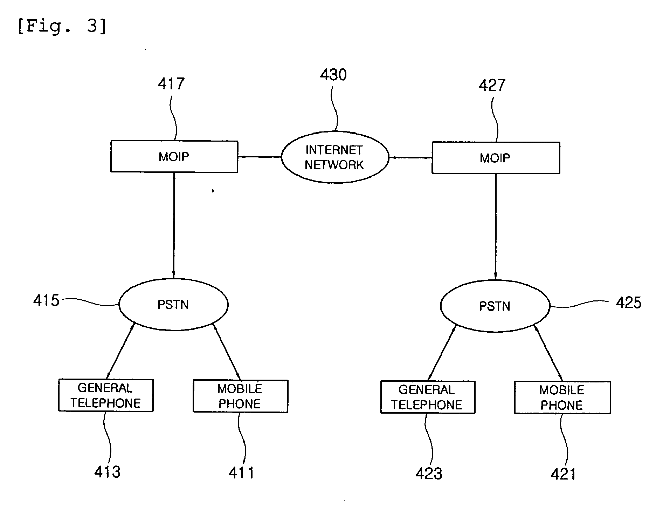

The various embodiments of a method of using the video communication apparatus according to the present invention performed using another video communication apparatus and one or more networks connected thereto will be described with reference to FIG. 3 below.

First, when a call is requested from a general telephone 413 or a mobile phone 411 through a PSTN 415, a first video communication apparatus 417 according to the present invention can check a password or an arbitrary set value and can call a second video communication apparatus 427 over the Internet 430. Meanwhile, when a call is requested from the second video communication apparatus 427 for a phone call over the Internet 430, the general telephone 413 or the mobile phone 411 can be connected through the PSTN 415.

When the two above-described functions are combined and used, it is possible to perform intermediation between a general telephone and a mobile phone using the video communication apparatus. That is, when a call is requested from the general telephone 413 or the mobile phone 411 through the corresponding PSTN 415, the video communication apparatus 417 checks a password or an arbitrary set value, which are included in a call signal, and calls the second video communication apparatus 427 via the Internet 430. The second video communication apparatus 427 connects a general telephone 423 and a mobile phone 421, which are connected to the second video communication apparatus 427 through the PSTN 425 in which the second video communication apparatus 427 is included. Here, the PSTN 415 to which the first video communication apparatus 417 is connected may be the same network as the PSTN 425 to which the second video communication apparatus 427 is connected. However, in this case, the usefulness thereof is deteriorated, so that the present invention, described in the present patented specification, may be further appropriately adapted to the case in which the two PSTNs are different networks.

Although not shown in detail, when a transmission mode for transmitting a TV program that is being watched to the second video communication apparatus 427 through a user interface is set, the first video communication apparatus 417 can call and provide access to the second video communication apparatus 427 over the Internet 430 and transmit the TV program being watched. In contrast, when the TV program is received from the second video communication apparatus 427 over the Internet 430, the TV program can be displayed on the TV screen of the first video communication apparatus 417.

In this case, as the same as in the case of the video communication, the first video communication apparatus 417 can record the TV program, transmitted from the second video communication apparatus 427, in a memory unit or a recording unit capable of being accessed through a user interface.

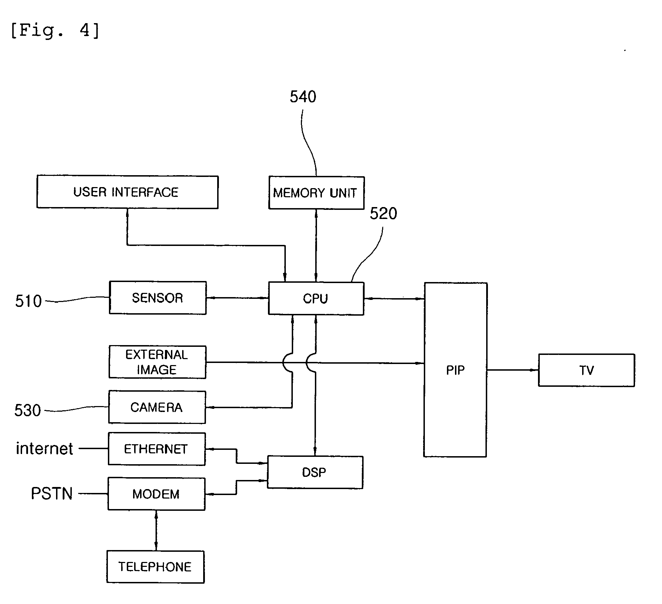

Further, an embodiment of the video communication apparatus will be described with reference to FIG. 4, along with FIG. 3. A sensor 510, such as an infrared sensor or a motion sensing sensor, for sensing an intruder in a secured space is attached to the user interface of a first video communication apparatus 417. In response to the sensing signal of the sensor 510, a CPU 520 can automatically call a predetermined second video communication apparatus 427, a general telephone 413, or a mobile phone 411 based on a program stored in a memory unit 540. Here, the image transmission function of the first video communication apparatus 417 can be used to perform the function of a kind of security device by transmitting images, acquired by an imaging device, such as a camera 530 configured to be connected to the user interface or independently operated, together with an intrusion alarm announcement stored in the memory unit 540.

In the above-described embodiments, although image signals and data have mainly been described, voice signals and data can be handled in the same manner as the image signals and data. Otherwise, the voice signals and data can be realized in a simple manner, compared to the image signals and data. For example, voices received and transmitted in a general telephone or a mobile phone through a PSTN can be processed by the receiver and transmitter of a telephone through a modem.

According to the present invention, video communication can be performed with a counter party while a user is watching a TV by displaying external images and the images of the counter party on the TV in a PIP manner. Further, a TV screen being watched can be transmitted to the counter party using a video phone. Furthermore, phone calls can be made with a counter party using a general external telephone or a mobile phone through a video communication apparatus located in a place connected to the Internet without regard to country or region, that is, whenever and wherever, while paying a low charge.

## Claims

1. A video communication apparatus, comprising:
a Local Area Network (LAN) connection unit (303) connected to a LAN so as to connect to an Internet;
a modem (304) configured to provide access to a Public Switched Telephone Network (PSTN, 425);
a Digital Signature Processor (DSP, 306) configured to process digital signals received from the LAN connection unit (303) and the modem (304), and to convert internal signals into digital signals to be transmitted through the modem (304) or the LAN connection unit (303);
a Central Processing Unit (CPU, 308) configured to receive standard signals, processed and obtained by the DSP (306), and to convert them into signals suitable for a TV (309), or configured to directly/indirectly receive signals through a terrestrial wave/cable broadcast signal reception unit or camera signals and to transmit them to the DSP (306);
a memory unit (310) connected to the CPU (308) and configured to record programs and protocols, which are signal processing references of the CPU (308);
a Picture In Picture (PIP) processing unit (305) configured to directly/indirectly receive signals from the CPU (308) or the terrestrial wave/cable broadcast signals, to receive adjustment commands for image compilation, and to transmit compiled signals so as to arrange images, to be displayed, in a predetermined manner;
a TV (309) configured to receive and display the compiled signals from the PIP processing unit (305); and
a user interface (311) configured to input commands for the CPU (308) and to input additional signals for the CPU (308).

2. A method of using the video communication apparatus of claim 1, comprising:
an external image processing step of receiving external image signals through the terrestrial wave/cable broadcast, and maintaining them or converting them into a form suitable for a TV (309);
a counter party image processing step of receiving image signals from a counter party for communication through the Internet (430) or the PSTN (425), and converting them into signals in a form suitable for the TV (309);
a user image processing step of maintaining or converting the user side images, input through the user interface (311), into signals in a form suitable for the TV (309); and
a step of displaying signals, resulting from the external image processing step, the counter party image processing step, and the user side image processing step on a screen of the TV (309), in a state of being received and compiled by the PIP processing unit (305), in a PIP manner.

3. A method of using the video communication apparatus of claim 1, comprising:
a step of checking a call request of a general telephone (423) or a mobile phone (421) through the PSTN (425);
a step of checking a predetermined signal set value included in the call request; and
a step of, when the predetermined signal set value is checked, requesting a call from another video communication apparatus over the Internet (430).

4. The method as set forth in claim 3, further comprising:
a step of the another video communication apparatus checking signals included in a call request of the video communication apparatus;
a step of checking a predetermined signal set value included in the call request; and
a step of, when the predetermined signal set value is checked, calling a general telephone (423) or a mobile phone (421) through the accessed PSTN (425).

5. A method of using the video communication apparatus of claim 1, comprising:
a step of checking a call request of an another video communication apparatus through the Internet;
a step of checking a predetermined signal set value included in the call request; and
a step of, when the predetermined signal set value is checked, calling a general telephone (423) or a mobile phone (421) through the accessed PSTN (425).

6. A method of using the video communication apparatus of claim 1, the user interface including a sensor (510) for sensing an intruder in a target space, the method comprises:
a step of sensing the intruder and providing a notification thereof to the CPU (308) using the sensor (510); and
a step of the CPU (308, 520) transmitting images of a camera (530) or call signals to at least one of another video communication apparatus, a mobile phone (421), and a general phone (423) through the DSP (306).

7. A method of using the video communication apparatus of claim 1, comprising:
a step of setting a transmission mode for transmitting external images of terrestrial wave/cable broadcast for another video communication apparatus through the user interface (311);
a step of calling and accessing the another video communication apparatus over the Internet (430); and
a step of converting the external images into signals in a form suitable for the Internet (430) and transmitting the resulting signals to the another video communication apparatus.

8. A method of using the video communication apparatus of claim 1, comprising:
a step of checking a call signal from another video communication apparatus and obtaining access thereto; and
a step of maintaining or converting signals transmitted from the another video communication apparatus into signals suitable for a TV (309), and displaying them on a screen of the TV (309).
